(19) Europäisches Patentamt
European Patent Office
Office européen des brevets

(11) **EP 4 432 162 A1**

(12) **EUROPEAN PATENT APPLICATION**

(43) Date of publication:
**18.09.2024 Bulletin 2024/38**

(21) Application number: **23161484.3**

(22) Date of filing: **13.03.2023**

(51) International Patent Classification (IPC):
**G06N 3/045** (2023.01)

(52) Cooperative Patent Classification (CPC):
**G06N 3/0464; G01S 7/415; G01S 7/417; G06F 18/214; G06N 3/045;** G01S 13/282; G01S 13/44; G01S 13/582; G06F 2218/12; G06N 3/082

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies Dresden GmbH & Co . KG**
**01099 Dresden (DE)**

(72) Inventors:
• **SPONNER, Max**
**01069 Dresden (DE)**
• **SERVADEI, Lorenzo**
**81539 München (DE)**
• **WASCHNECK, Bernd**
**01097 Dresden (DE)**

(74) Representative: **Kraus & Lederer PartGmbB**
**Thomas-Wimmer-Ring 15**
**80539 München (DE)**

(54) **EARLY-EXIT NEURAL NETWORKS FOR RADAR PROCESSING**

(57)  Processing techniques for processing radar measurement frames are disclosed. Deep neural networks are employed. Deep neural networks (500) having an early-exit architecture including one or more early-exit branches (520, 530) are employed. The functionality and operation of such deep neural networks are disclosed.

**FIG. 4A**

**Description**

TECHNICAL FIELD

Various examples of the disclosure generally pertain to processing radar measurement frames. Various examples of the disclosure specifically relate to a deep neural network that includes one or more early-exit branches.

BACKGROUND

Radar sensors enable various use cases for smart devices, e.g., Internet of Things (IoT) devices and personal computing devices (user equipment, UE).

However, processing radar measurement frames acquired by radar sensors on re-source-constrained UE remains a challenge. This is because processing radar measurement frames according to prior art solutions is often computationally expensive. Possibilities of implementing respective processing algorithms on low-power embedded compute circuitry are limited.

SUMMARY

Accordingly, a need exists for advanced techniques of processing a plurality of radar measurement frames. A need exists for advanced techniques of processing the plurality of radar measurement frames in a power-efficient manner. A need exists for advanced techniques of processing the plurality of radar measurement frames in a computationally efficient manner.

This need is met by the features of the independent claims. The features of the dependent claims define embodiments.

A computer-implemented method includes obtaining a plurality of radar measurement frames. The method also includes processing, in a deep neural network, inputs to the deep neural network. The inputs are based on the plurality of radar measurement frames. The deep neural network includes a processing pipeline. The processing pipeline is formed by a plurality of layers of the deep neural network. The processing pipeline provides an estimate of a target observable. Two or more layers of the plurality of layers are coupled with a respective early-exit branch of the deep neural network. Each early-exit branch provides a respective early-exit estimate of the target observable. This enables selectively aborting further processing of an input of the inputs in the processing pipeline.

Program code is executable by a processor. The processor, upon loading and executing the program code, perform such computer-implemented method as disclosed above.

A processing device includes the processor and the memory. The processor is configured to load and execute the program code to perform such computer-implemented method as disclosed above.

A computer-implemented method includes providing, to a deep neural network, a first input of a sequence of inputs. The computer-implemented method also includes processing, in a main processing pipeline of the deep neural network, the first input. Thereby, an estimate of a target observable is obtained. The method also includes providing, to the deep neural network, one or more second inputs of the sequence of inputs and monitoring outputs of at least one of one or more early-exit branches of the deep neural network. The one or more early-exit branches are coupled to the main processing pipeline. Said monitoring is executed when providing the first input and the one or more second inputs. Then, depending on said monitoring, it is configured whether at least one of the one or more second inputs is processed in the main processing pipeline.

Program code is executable by a processor. The processor, upon loading and executing the program code, perform such computer-implemented method as disclosed above.

A processing device includes the processor and the memory. The processor is configured to load and execute the program code to perform such computer-implemented method as disclosed above.

A computer-implemented method of processing inputs to a deep neural network as disclosed. The deep neural network includes a processing pipeline. The processing pipeline has a plurality of layers. The processing pipeline provides an estimate of a target observables. Two or more layers of the plurality of layers are coupled with a respective early-exit branch of the deep neural network. Each early-exit branch provides a respective early-exit estimate of the target observable. The method includes obtaining a plurality of data sets. The method also includes processing, in the deep neural network, a first input that is based on one or more first data sets of the plurality of data sets. A given one of the early-exit branches provides a first early-exit estimate for the first input. After processing the first input, the method also includes processing, in the deep neural network, a second input that is based on one or more second data sets of the plurality of data sets. The second input is different than the first input. The given one of the early-exit branches provides a second early-exit estimate for the second input. A similarity score is determined between the first early-exit estimate and the second early-exit estimate. Then, depending on the similarity score between the first early-exit estimate and the second early-exit estimate, the method includes selectively processing of the second input in the processing pipeline downstream of the respective one of the plurality of layers to which the given one of the early-exit branches is coupled.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system according to various examples.

FIG. 2 schematically illustrates a radar sensor according to various examples.

FIG. 3 schematically illustrates processing of radar measurement frames in a deep neural network according to various examples.

FIG. 4A schematically illustrates the deep neural network having an early-exit architects according to various examples.

FIG. 4B schematically illustrates multiple states in which the deep neural network can operate according to various examples.

FIG. 5 is a flowchart of a method according to various examples.

FIG. 6 schematically illustrates a preprocessing of multiple radar measurement frames according to various examples.

FIG. 7 is a flowchart of a method according to various examples.

FIG. 8 schematically illustrates processing radar measurement frames of a time sequence of radar measurement frames according to various examples.

FIG. 9 schematically illustrates an output space and a similarity measure defined in the output space according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of processing radar measurement frames are disclosed. The radar measurement frames are acquired by a radar sensor.

According to the various examples disclosed herein, a millimeter-wave radar sensor may be used to perform the radar measurement; the radar sensor operates as a frequency-modulated continuous-wave radar that includes a millimeter-wave radar sensor circuit, one or more transmitters, and one or more receivers. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used.

A radar sensor, in one mode of operation, transmits a plurality of radar pulses, such as chirps, towards a scene. This refers to a pulsed operation. In some embodiments the chirps are linear chirps, i.e., the instantaneous frequency of the chirps varies linearly with time.

A Doppler frequency shift can be used to determine a velocity of the target. Measurement data provided by the radar sensor can thus indicate depth positions of multiple objects of a scene. It would also be possible that velocities are indicated.

The radar sensor can output measurement frames. As a general rule, the measurement frames (sometimes also referred to as data frames or physical frames) include data samples over a certain sampling time for multiple radar pulses, specifically chirps. Slow time is incremented from chirp-to-chirp; fast time is incremented for subsequent samples. A channel dimension may be used that addresses different antennas. The radar sensor outputs a time sequence of measurement frames.

Techniques are disclosed that enable processing of the radar measurement frames in a UE. For instance, the UE can be a smart phone, a touchscreen, a smart watch, a smart television; etc. Techniques are disclosed that enable processing radar measurement frames in an edge-computing device.

Hereinafter, advanced techniques of processing radar measurement frames are disclosed. Advanced processing algorithms are disclosed. These processing algorithms are tailored to enable computationally efficient processing, while at the same time accuracy in predicting target observables is maintained.

According to various examples, a machine-learning algorithm is employed for processing a plurality of radar measurement frames. The machine-learning algorithm is implemented by a deep neural network. The deep neural network (NN) includes a processing pipeline. The processing pipeline is configured to obtain an input. The processing pipeline is configured to provide an output. The processing pipeline includes a sequence of network layers (or simply layers). This includes an input layer, an output layer, and multiple hidden layers in between the input layer and the output layer.

Each layer of the NN performs a respective compute operation. At least some of the layers are convolutional layers that apply a convolution between input feature maps and respective kernels. Each layer has certain weights that process input activations. the weights are determined in a training process.

According to various examples, the NN is pre-trained to provide a certain output based on the input. For instance, the NN can be trained to solve a classification task or a regression task. For instance, a gesture classification could be implemented, i.e., the target observable that is predicted is the gesture class. Obstacle detection could be implemented, i.e., the target observable that is predicted is presence or absence of an obstacle. The speed of objects can be detected, i.e., the target observable that is predicted is the speed of a primary object, e.g., in meters per second. Further examples include people counting. Here, the number of people in a scene is determined; different candidate classes are associated with different people counts. Another example pertains to motion classification. The disclosed techniques can be used to recognize and classify various types of motions. For instance, it would be possible to determine a gesture class of a gesture performed by an object. Different candidate classes pertain to different gestures. Other examples of motion classification would pertain to kick motion classification. Smart Trunk Opener is a concept of opening and closing a trunk or door of a vehicle without using keys, automatic and hands-free. A kick-to-open motion is performed by the user using the foot. Gait classification can be performed.

These are only examples. The particular task solved by the NN is not germane for the techniques disclosed herein. The particular target observable that is predicted by the NN is not germane for the techniques disclosed herein. The techniques disclosed herein are widely applicable to different NNs trained to solve different tasks.

Some example NN that can be used in accordance with the disclosed techniques are disclosed in: US2023068523 A; US2021325509 A; US2019302253 A; US2022404486 A.

Various techniques are based on the finding that a significant challenge of applying NNs to processing of radar measurement frames in an edge deployment is the resource requirement, both in terms of required powerful processing as well as processing power per-se. This makes it challenging to deploy respective NNs on low-power embedded compute circuitry.

According to various examples, a specifically adapted NN is disclosed that enables reduced compute complexity as well as reduced power consumption.

According to various examples, a low-power embedded compute circuitry, e.g., a microcontroller, is configured to execute processing a plurality of radar measurement frames.

According to various examples, a NN is used that includes - in addition to the (main) processing pipeline - one or more early-exit branches. Two or more layers of the plurality of layers of the processing pipeline are coupled with a respective early-exit branch. Each early-exit branch provides a respective early-exit estimate of a target observable to be predicted.

In other words, and more generally, the NN is implemented using an early-exit architecture. An "early-exit NN" is employed for radar processing.

Early-exit NNs are disclosed for other use cases in:

Panda, Priyadarshini, Abhronil Sengupta, and Kaushik Roy. "Conditional deep learning for energy-efficient and enhanced pattern recognition." 2016 Design, Automation & Test in Europe Conference & Exhibition (DATE). IEEE, 2016.

Fang, Biyi, et al. "Flexdnn: Input-adaptive on-device deep learning for efficient mobile vision." 2020 IEEE/ACM Symposium on Edge Computing (SEC). IEEE, 2020.

Amthor, Manuel, Erik Rodner, and Joachim Denzler. "Impatient dnns-NNs with dynamic time budgets." arXiv preprint arXiv:1610.02850 (2016).

Hu, Hanzhang, et al. "Learning anytime predictions in NNs via adaptive loss balancing." Proceedings of the AAAI Conference on Artificial Intelligence. Vol. 33. No. 01. 2019.

An early-exit branch maps the latent feature space of the respective layer of the processing pipeline to which it is coupled onto the output space of the NN. E.g. early-exit branch can include one or more convolutional layers and, e.g., a fully connected layer. The early-exit branch, accordingly, typically performs a decoding of the embedded latent feature space of the respective layer of the processing pipeline to which it is coupled (hereinafter referred to as breakout layer). Thus, since, both, the processing pipeline as well as each of the early-exit branches provides the estimate of the target observable and the output space, it is possible to rely on either the output of the processing pipeline or the output of any one of the early-exit branches as consolidated estimate of the target observable.

However, the early-exit branches are designed to provide the respective early-exit estimate in a computationally efficient manner. I.e., processing along an early-exit branch requires fewer computational resources if compared to processing along the main processing pipeline (downstream from the respective breakout layer). Thus, the early-exit branches enable selective aborting of further processing of an input to the neural network and the processing pipeline.

According to the various disclosed examples, the early-exit estimate provided by an early-exit branch can have multiple functions. These functions are summarized in TAB. 1 below:

TAB. 1: Functions of early-exit estimates. Functions 1 and 2 can also be combined with each other.

| FUNCTION OF EARLY-EXIT ESTIMATE | DESCRIPTION |
| --- | --- |
| I | In a first function, the early-exit estimate is used to determine whether significant changes in the input data are present, so that a fallback to full processing, e.g., along the full main processing pipeline of the NN, is required. I.e., it is possible to monitor the evolution of the early-exit estimate over multiple inputs and, responsive to detecting a significant dynamic, the main processing pipeline of the NN can be (reactivated. For instance, a similarity measure can be determined between subsequently processed (time-adjacent) early-exit estimates. A similarity measure can be alternatively or additionally determined between the early-estimate and a reference early-exit estimate, e.g., determined when first presenting an input associated with the current scene to the NN. |

(continued)

| FUNCTION OF EARLY-EXIT ESTIMATE | DESCRIPTION |
|---|---|
|  | Based on said monitoring, it is possible to configure whether subsequent inputs are processed in the main processing pipeline or not. I.e., the processing pipeline can be switched on or off, depending on whether the current input corresponds to a previously seen scene or not. This enables to tailor the budget of computational resources. Use of the processing pipeline can be restricted to inputs that need more accurate prediction of the target observable, e.g., new scenes. |
| II | Alternatively or additionally to such first function, in a second function, the early-exit estimate is used to determine the consolidated estimate of the NN. In other words, in addition to or alternatively to merely monitoring whether unseen input data is presented to the NN (as in the first function), the early-exit estimate can also be used to determine the output of the NN. An estimate of the target observable provided by the NN can be updated based on the early-exit estimate. Various examples disclosed herein provide for logic that selects a given one of the early-exit branches to provide the first and/or second functionality. This logic can operate state specific, i.e., can consider different states of processing inputs in the NN. For |
|  | instance, depending on the state, it is possible to use either the output of the processing pipeline as the consolidated estimate or the output of a given one of the early-exit branches as the consolidated estimate. For different scenes, different early-exit branches can be selected to provide the first and/or second functionality. Function II is optional: For instance, instead of using the early-exit estimate for current input to determine the consolidated estimate, it would also be possible to store and reuse as the consolidated estimate of the NN an earlier early-exit estimate or earlier consolidated estimate of the NN. |

To provide function I and/or II, it would be possible to rely on a selected given early-exit branch. I.e., one of multiple early-exit branches can be selected. For instance, the early-exit estimates of all early-exit branches can be compared with the primary estimate proved by the main processing pipeline. The most upstream early-exit branch that predicts in agreement with the primary estimate can be selected. The most upstream early-exit branch in agreement with a majority vote among all estimates can be selected.

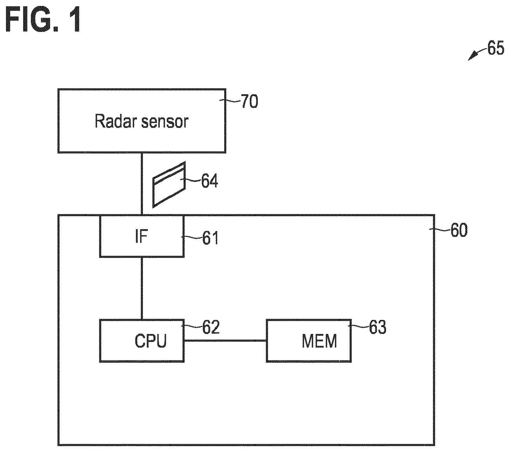

FIG. 1 schematically illustrates a system 65. The system 65 includes a radar sensor 70 and a processing device 60. The processing device 60 can obtain measurement data 64 from the radar sensor 70.

For instance, the processing device could be an embedded device, a smartphone, a smart watch, etc.

A processor 62 - e.g., a general-purpose processor (central processing unit, CPU), a field-programmable gated array (FPGA), an application-specific integrated circuit (ASIC) or a low-power embedded compute circuitry - can receive the measurement data 64 via an interface 61 and process the measurement data 64. For instance, the measurement data 64 could include a time sequence of measurement frames, each measurement frame including samples of an ADC converter.

The processor 62 may load program code from a memory 63 and execute the program code. The processor 62 can then perform techniques as disclosed herein, e.g., processing input data using an ML algorithm, making a classification prediction using the ML algorithm, training the ML algorithm, etc.

Details with respect to such processing will be explained hereinafter in greater detail; first, however, details with respect to the radar sensor 70 will be explained.

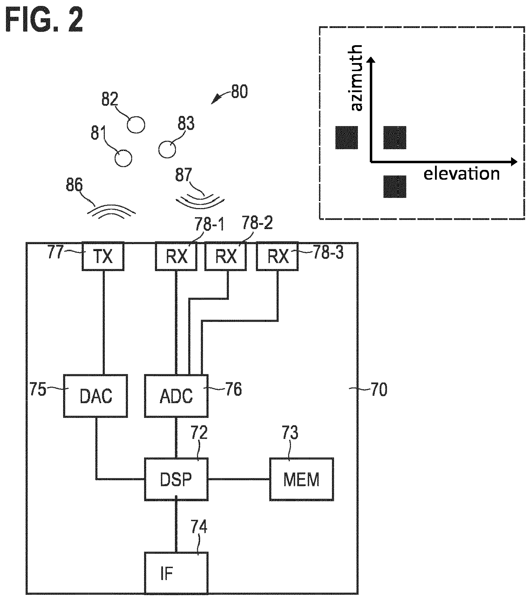

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see inset of FIG. 2, so that the phase differences between different pairs of the antennas address azimuthal and elevation angles, respectively). The processor 72 can process raw data samples obtained from the ADC 76 to some larger or smaller degree. In some examples, radar measurement frames (sometimes also referred to as data frames or physical frames) are determined and output.

The radar measurement can be implemented as a basic frequency-modulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate signal. This signal is of significantly lower frequency than that of the transmitted signal and therefore the sampling rate of the ADC 76 can be reduced accordingly. The ADC may work with a sampling frequency of 2 MHz and a 12-bit accuracy.

As illustrated, a scene 80 includes multiple objects 81-83. Each one of these objects 81-83 has a certain distance to the antennas 78-1, 78-2, 78-3 and moves at a certain relative velocity with respect to the sensor 70. These physical quantities define range and Doppler frequency of the radar measurement. The lateral position with respect to the sensor 70 defines the elevation and azimuthal angle.

For instance, the objects 81-83 could pertain to three persons; for people counting applications, the task would be to determine that the scene includes three people. In another example, the objects 81, 82 may correspond to background, whereas the object 83 could pertain to a hand of a user - accordingly, the object 83 may be referred to as target or target object. Based on the radar measurements, gestures performed by the hand can be recognized. This is only one example of a task solved by a respective processing algorithm. Various types and kinds of target observables can be predicted.

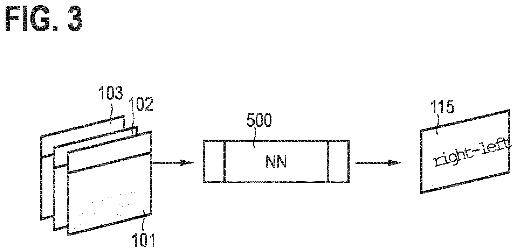

FIG. 3 schematically illustrates processing of a plurality of radar measurement frames 101-103 using a NN 500. Inputs to the NN 500 are based on the plurality of radar measurement frames 101-103. Preprocessing would be possible. Then, a consolidated estimate 115 is provided that predicts the target observable. A downstream processing associated with a certain use case uses the consolidated estimate 115. For instance, a user interface may be controlled based on the consolidated estimate 115. User interaction may be based on the consolidated estimate 115.

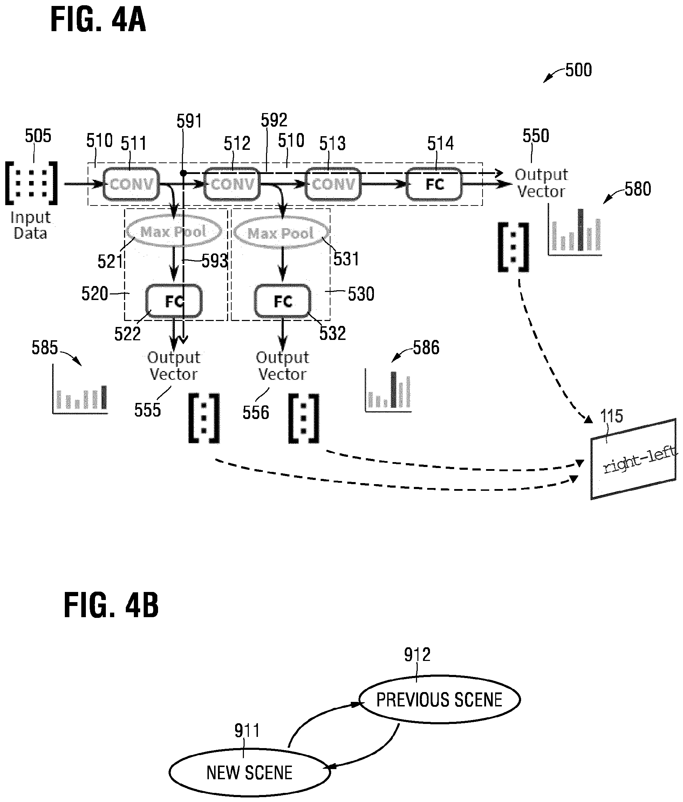

According to examples, the NN 500 implements an early-exit architecture. Details are described in connection with FIG. 4A.

FIG. 4A illustrates details with respect to the NN 500. The NN 500 processes inputs 505, e.g., provided as a multidimensional array. These inputs 505 are based on the plurality of radar measurement frames.

In one example, each of the radar measurement frames of the plurality of radar meant measurement frames is provided, one after another, as an input 505 to the NN 500. In other scenarios, preprocessing is possible, for example to determine aggregated radar measurement frames based on two or more radar measurement frames.

The NN 500 includes a processing pipeline 510. The processing pipeline is formed by multiple layers 511-514. In the illustrated example, the layers 511-513 are convolutional layers and the layer 514 is a fully-connected layer. This is only one example other implementations of the processing pipeline 510 are conceivable. More layers can be used. Other types of layers can be used.

The processing pipeline 510 provides the estimate 550 of the target observable to be predicted. The estimate of the target observable provided by the processing pipeline 510 will be labelled primary estimate 550 hereinafter.

In the illustrated example of FIG. 4A, a certain class is predicted. This is schematically illustrated by the prediction probabilities 580 provided for total of six classes in the inset of FIG. 4A. The particular class having the highest prediction probability in the primary estimate 550 is highlighted.

The layer 511 and the layer 512 are each coupled with a respective early-exit branch 520, 530. They are, accordingly, early-exit breakout layers.

Each one of the early-exit branches 520, 530 provides a respective early-exit estimate 555, 556 of the target observable.

In the illustrated example of FIG. 4A, the early-exit branches 520, 530 each include a respective max-pooling layer 521, 531, followed by a respective fully-connected layer 522, 532.

Illustrated in FIG. 4A are the prediction probabilities 580 for the early-exit estimates 555, 556. As is illustrated in FIG. 4A, the early-exit branch 530 provides the early-exit estimate 556 that is in agreement with the primary estimate 550 provided by the processing pipeline 510 (i.e., the same class has the maximum prediction probability in both estimates 550, 556). On the other hand, the early-exit branch 520 provides the early-exit estimate 520 that is not in agreement with the primary estimate 550 provided by the processing pipeline 510 (i.e., different classes have the maximum prediction probability in the two estimates 555, 550) .

The early-exit branches enable selective aborting of further processing of an input 505 in the processing pipeline 510, i.e., downstream of the respective breakout layer 511, 512. Thereby, computational resources for making predictions are reduced. This effect is explained in further detail below.

As a general rule, using one of the early-exit estimate 555, 556 as the consolidated estimate 115 is computationally less expensive if compared to using the primary estimate 550 as the consolidated estimate 115. This is illustrated in connection with the early-exit branch 520 in FIG. 4A. A respective input 505 to the NN 500 is processed in the main processing pipeline up to a breakout point 591 that is at the output side of the breakout layer 511. Then, the processing resources required along the path 592 - i.e., further downstream processing along the processing pipeline 510 - are significantly higher than the processing resources required along the path 593 along the early-exit branch 520. For instance, multiple convolution operations are executed in the layers 512, 513.

According to various examples, such processing of inputs 505 in the processing pipeline 510 downstream of the respective breakout layer 511, 512 to which the respective, relied-upon early-exit branch 520, 530 is coupled can be selectively aborted. This reduces the required computational resources. It reduces the time-to-prediction provided by the NN 500. Processing latency can be reduced.

The consolidated estimate 115 of the NN 500 is determined based on one or more of the primary estimate 550 and the early-estimates 555, 556. There are many options available regarding how to determine the consolidated estimate 115. For example, an average can be formed from amongst the primary estimate 550 and each of the early-estimates 555, 556. In a further example, it would be possible to determine the consolidated estimate based on a majority vote among the early-exit estimates 555, 556, as well as the primary estimate 550 provided by the processing pipeline 510. For example, in the scenario FIG. 4A, the majority vote would be the class predicted by the primary estimate 550 and the early-exit estimate 556 (2:1 vote over the early-exit estimate 555). In some examples, the particular calculation of the consolidated estimate 115 depends on a certain state in which the NN 500 operates, as illustrated in FIG. 4B.

FIG. 4B schematically illustrates states 911, 912 in which the NN 500 can operate. Depending on the state 911, 912 the consolidated estimate 115 is determined differently.

In detail, the state 911 is associated with a new, i.e., previously unseen scene 80; while the state 912 is associated with a scene 80 that has been previously seen by the NN 500.

For a new scene - state 911 -, the consolidated estimate 115 can be equal to the primary estimate 550 provided by the processing pipeline 510. It would also be possible that the consolidated estimate 115 corresponds to a majority vote amongst all of the estimates 550, 555, 556. An average of all prediction probabilities 580 could be calculated.

Differently, when operating in the state 912, the consolidated estimate 115 can be equal to the consolidated estimate 115 determined when last operating in the state 911. This means that the prediction of the target observable does not change when operating in the states 912. Alternatively, the consolidated estimate 115 can correspond to the early-exit estimate of a given one of all early-exit branches that is considered characteristic for the current scene (scene-characteristic early-exit branch). Cf. TAB. 1: function II. For instance, an early-exit branch can be considered to be characteristic for the current scene depending on whether its early-exit estimate is in agreement with a majority vote amongst all estimates or is in agreement with the estimate provided by the processing pipeline when operating in the state 911 for that scene. It would be possible to monitor the early-exit estimate of the scene characteristic early-exit branch and - depending on said monitoring - either reuse an earlier estimate of the target observable as the consolidated estimate 115 - when operating in the state 912 -, or updating the consolidated estimate 115 based on an output of the processing pipeline 150, i.e., based on the primary estimate 550. Thus, processing of the inputs 505 in the processing pipeline 510 is aborted when reusing the earlier estimate of the target observable as the consolidated estimate 115, i.e., when operating in the state 912. Thus, state 912 is a low-power consumption state in which the computational resources required are particularly low, in particular if compared to the state 911. It is not required to continue processing along the entire processing pipeline 510 when operating in the state 912.

According to various examples, the transitions between the state 911, 912 are regulated based on monitoring an evolution of at least one of the early-exit estimates 555, 556. Cf. TAB. 1: function I. Thus, it can be tracked over time whether at least one of the early-exit estimates 555, 556 significantly changes from input to input 505 when operating in the state 912. If such a significant change is detected, a transition to the state 911 can be executed. A significant change can be indicative of a change of the observed scene 80. When a change in the observed scene 80 is detected, it can be desirable to operate in the state 911 to determine a new primary estimate 550. For instance, the evolution of a scene-characteristic early-exit branch can be monitored when operating in the state 912. Thus, when transitioning from the state 911 to state 912, a given one of the available early-exit branches 520, 530 can be selected as a scene-characteristic early-exit branch. It is then possible to monitor the evolution of the early-exited estimate of that selected early-exit branch 520, 530. Then, the consolidated estimate 115 is based on a respective selected on of all early-exit estimates 555, 556. The scene-characteristic early-exit branch can be determined based on a comparison of all early-exit estimates and the primary estimate 550 provided by the processing pipeline 510 when transitioning from the state 911 to the state 912. For instance, a majority vote can be used and the most upstream early-exit branch (i.e., coupled to the most upstream breakout layer) can be used as the scene-characteristic early-exit branch.

As will be appreciated from the discussion of FIG. 4B, such approach is based on a time-correlated analysis of the inputs. This results in high similarities between subsequent input and changes in the inputs during inference result in corresponding changes in the classification output vectors.

$$f_{\text{NN}}(x + \Delta x) \approx y + \Delta y \qquad (1)$$

Here, $f_{NN}$ denotes the NN 500, $x$ the input, $\Delta x$ a change between subsequent inputs, $y$ the respective estimate 550, 555, 556, and $\Delta\boldsymbol{y}$ is the change of the respective estimate 550, 555, 556.

Hereinafter, two examples of making predictions of the target observables and transitioning between the states 911 and 912 will be provided.

EXAMPLE A

The change in the NN's output vector $(\vec{o})$ determines the similarity between input samples. The similarity is, in one example, the Euclidean distance between the current classification output vector $(\vec{o_t})$ and the vector of a previous sample $(\vec{o_{t_0}})$ that it is being compared to, see Eq. 2. The output vectors form a C-dimensional vector space, where C is the number of classes for the prediction task.

$$\mathrm{d}(\vec{p},\vec{q}) = \sqrt{\sum_{i=1}^{C}(p_i - q_i)^2} \quad , \quad \vec{p},\vec{q} \in \mathbb{R}^C \qquad (2)$$

The Euclidean distance metric is only one example. Other distance metrics can be employed.

The change can be defined, in one example, the distance between the output vectors of the most upstream early-exit branch $(\vec{o}_{t,exit_0})$; in the scenario of FIG. 4A, this is always the early-exit branch 520:

$$\mathrm{change}(t_1, t_0) = d\left(\vec{o}_{t_1,\mathrm{exit}_0}, \ \vec{o}_{t_0,\mathrm{exit}_0}\right), \vec{o} \in \vec{\mathbb{R}} \qquad (3)$$

I.e., function I of TAB. 1 is implemented based on the most upstream early-exit branch.

Furthermore, while Eq. 3 uses the change between t and $t_0$ (i.e., the earliest early-exit estimate of the present scene; may also be labeled $t_{initial}$), it would also be possible to rely on the difference to the preceding earliest early-exit estimate.

The initial input of a scene - i.e., when operating in the state 911 - is labeled by the majority vote of all estimates of the NN (see Eq. 4, label $\boldsymbol{y_i} = \boldsymbol{argmax}(\vec{o}_{t,exit_i})$). This means that the estimate on which most early-exit branches and the processing pipeline agree will be returned as the prediction of the target observable. The consolidated estimate 115 is accordingly provided as follows when operating in the state 911:

$$\mathrm{vote}(y_1, y_2, ..., y_n) = \mathrm{argmax}\, c\left(\sum_{i=1}^{n}[y_i = c]\right) \qquad (4)$$

The prediction at each time-step is defined in Eq. 5. If the currently processed input is similar enough to the initial input of the scene (its change is smaller than the threshold), the prediction of the initial input will be reused - this corresponds to state 912. I.e., in this scenario function II of TAB. 1 is not used; the consolidated estimate is kept constant while operating in the state 912. No deeper layers and classifiers than those required to produce the first classification vector will be executed in this case. If it is not similar to the initial sample, it will be labeled by the majority vote of all classifiers and is the first sample of a new scene (i.e., fallback to state 911) .

$$\mathrm{output}(t) = \begin{cases} \mathrm{vote}_{t_{\mathrm{initial}}} & ,\mathrm{if}\ \mathrm{change}(t, t_{\mathrm{initial}}) < \mathrm{threshold} \\ \mathrm{vote}_t & ,\mathrm{if}\ \mathrm{change}(t, t_{\mathrm{initial}}) \geq \mathrm{threshold} \end{cases} \qquad (5)$$

This is for a classification task. For a regression task, the threshold can be defined similarly as it would describe the maximum acceptable difference between the two scalar values of the compared time-steps.

The majority voting eliminates the dependence on unreliable confidence-based metrics. Comparing the currently processed input to the initial input of the scene, rather than the direct predecessor input, prevents mislabeling due to slow drift in the subsequent samples. Additionally, using the early classifier to produce the change metric (see Eq. 3) improves efficiency by allowing operations to be reused. The use of the early-exit estimate creates a simple similarity measure for complex radar data.

The example explained above does not perform prediction on subsequent inputs of a scene (function II of TAB. 1 is not used). Instead, it relies on the similarity between inputs to reuse the previously acquired prediction. The most upstream early-exit branch is always used to detect whether the same scene is still present. This means that higher-level features extracted by deeper hidden layers cannot be considered when calculating the change metric. This could lead to a significant drop in accuracy compared.

EXAMPLE B

To mitigate this, in another example B, the most upstream early-exit branch is not necessarily selected as the scene-characteristic early-exit branch for all scenes; but rather the most upstream early-exit branch is selected as the scene-characteristic early-exit branch that is in agreement with the majority vote among all estimates. See Eq. 6. This allows the mechanism to utilize an early-exit branch that is more likely to detect a new scene as it extracts the necessary features to label the initial sample correctly.

$$\text{select}(t) = \min_{i}\big(y_i(t) = \text{vote}(y_{1,t}, y_{2,t}, ..., y_{n,t})\big) \qquad (6)$$

Consistently, this characteristic early-exit branch is also considered when determining the similarity measure (cf. TAB 1: function I):

$$\text{change}(t_1, t_0) = d\big(\vec{o}_{t_1,\text{exit}_x}, \vec{o}_{t_0,\text{exit}_x}\big), \quad \begin{matrix} \vec{o} \in \mathbb{R}^C \\ x = select(t_0) \end{matrix} \qquad (7)$$

The characteristic early-exit branch can also be used to make the prediction for the subsequent input (cf. TAB. 1: function II).This creates minimal overhead as the output vector is already calculated to determine whether the scene is changed.

$$\text{condition}(t) = \text{change}(t, t_{\text{initial}}) < \text{threshold} \quad \text{and}$$
$$\vec{o}_{t,exit_x} = \vec{o}_{t_{\text{initial}},exit_x}$$
$$\text{output}(t) = \begin{cases} \vec{o}_{t,exit_x} & \text{,if } \text{condition}(t) \\ \text{vote}_t & \text{,otherwise} \end{cases} \qquad (8)$$

This second example - if compared to the first example - trades improved prediction accuracy for additional computations. Scene change detection is now not only based on the distance between the characteristic early-exit branch output vectors compared to the threshold but also on the change of the prediction.This can be described as a patience-based decision mechanism. However, it adds a temporal component by not comparing the output of different early-exit branches for the same sample but the prediction of the same early-exit branch across similar inputs. The updated output function at each time-step is described by Eq. 8.

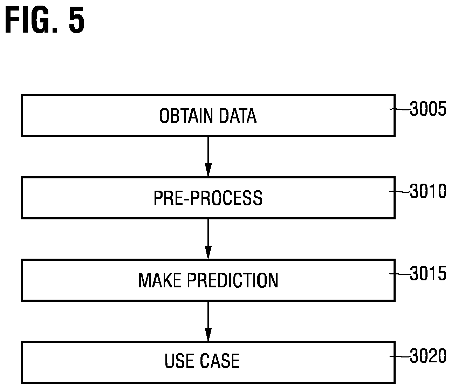

FIG. 5 is a flowchart of a method according to various examples. For instance, the method of FIG. 5 may be executed by the processor of a processing device upon loading program code from a memory and upon executing the program code. For example, it would be possible that the method of FIG. 5 is executed by the processor 62 upon loading program code that is stored in the memory 63 and upon executing this program code (cf. FIG. 1).

The method of FIG. 5 generally pertains to predicting a target observable. The method of FIG. 5 generally corresponds to processing radar measurement frames using a NN, specifically an early-exit NN. For instance, the NN 500 as discussed in FIG. 4A can be employed. A state-dependent processing as discussed in FIG 4B can be employed.

At box 3005, a plurality of radar measurement frames are obtained. For instance, respective radar measurement frames can be obtained via a communication interface (cf. FIG. 1: communication interface 61). Measurements can be executed.

The radar measurement frames of the plurality of radar measurement frames can be sequentially obtained. For instance, the plurality of radar measurement frames can form a time sequence. Thus, the radar sensor can perform measurements and provide an updated radar measurement frame at a certain refresh rate.

At box 3010, it is optionally possible to pre-process the plurality of radar measurement frames.

For example, the pre-processing can enable batch-wise processing in the NN. I.e., it would be possible to form multiple batches, wherein each batch includes two or more radar measurement frames that are sequentially is selected from the time sequence. At box 3010, such batches can be formed by buffering radar measurement frames as they sequentially are obtained when forming a batch that is then input to the NN. The inputs to the NN that is used for predicting the target observable can then be based on the batches.

In one example, multiple radar measurement frames of a batch can be concatenated to form a respective input to the NN.

In another example, it would be possible to re-arrange data entries of the radar measurement frames when forming the input. For example, it would also be possible to reduce a dimensionality of a data structure that is input to the NN. It is possible to form a respective aggregated radar measurement frame for each of the multiple batches. In particular, the time and channel dimensions of the multiple radar measurement frames of a given batch can be combined to a combined time and channel dimension.

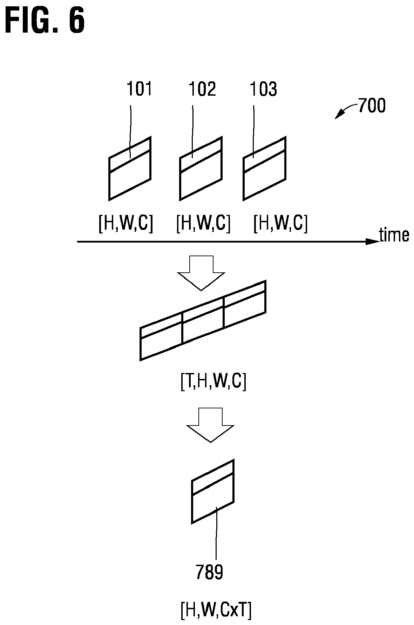

For instance, all radar measurement frames of a batch can be concatenated along time dimension (T) in a batch data structure: [T, H, W, C]. Here H denotes the height or slow time; W the width or fast time, and C is the channel dimension. Then, the entries can be re-ordered: to obtain the aggregated radar measurement frames having only three dimensions (rather than four): [H, W, C x T]. The channel and time dimension. FIG. 6 illustrates such combination of three radar measurement frames 101, 102, 103 of a time sequence 700 into a single aggregated radar measurement frame 789.

Referring again to FIG. 5: at box 3015, a prediction of a target observable is made. I.e., a consolidated estimate is obtained from respective processing algorithm implemented by a NN (cf. FIG. 3 and FIG. 4A: consolidated estimate 115 provided by the NN 500).

As a general rule, there are multiple options conceivable regarding how to operate the NN having the early-exit architecture. In a first option, the processing power headroom available in the computing device is monitored when executing the processing; if the processing power headroom falls below a certain threshold, then it would be possible to rely on the early-exit estimate of the target observable and abort further processing of an input in the processing pipeline. This limits required compute resources and ensures timely prediction of the target estimate. In a second option, it a confidence level for the early-exit estimates provided by the each early-exit branches is monitored and then the most upstream early-exit branch that has a confidence level exceeding a certain threshold is selected. In a third option, a policy NN is used that determines, based on the input, which early-exit branch to use or whether to use the primary estimate.

In a fourth option, a state dependent selection of a scene characteristic early-exit branch is used. This is described in FIG. 4B.

It is optionally possible to make use of that prediction of the target observable in a use case at box 3020. For instance, a GUI may be controlled based on a detected and classified gesture executed by the user. For instance, for a trunk opener, where a kick gesture is detected, the trunk may be opened. For instance, where passengers are detected in a vehicle, air conditioning in the vehicle may be activated. A count of persons may be used in order to trigger a security alert for security applications. These are only some examples of use cases and various other use cases are conceivable.

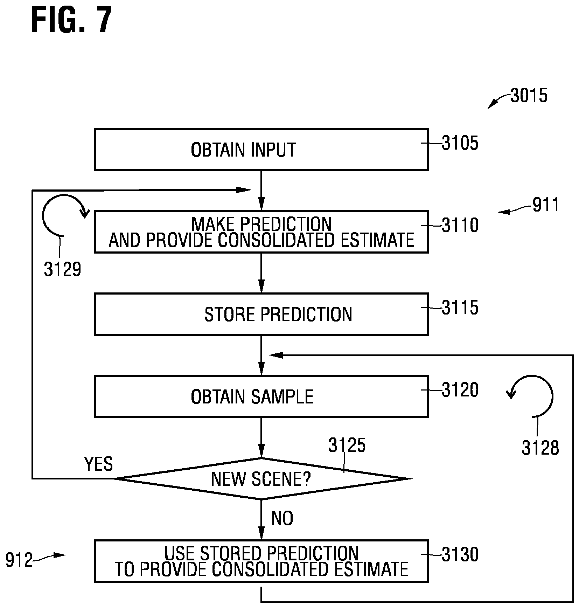

FIG. 7 is a flowchart of a method according to various examples. The method of FIG. 7 pertains to operating in NN to provide a prediction of a target observable. The NN provides a consolidated estimate of the target observable. The NN can be the NN 500 as previously discussed in connection with FIG. 4A.

In box 3105, a current input 505 is obtained. Based on this current input 505, a prediction of the target observable is made by the NN 500. A respective consolidated estimate 115 is provided. For example, in the first iteration 3129 of box 3110, the consolidated estimate 115 can equate to the primary estimate 550 provided by the processing pipeline 510. Alternatively, it would be possible that the consolidated estimate 115 equates to the majority vote among all early-exit estimates 555, 556 as well as the primary estimate 550.

The first iteration of box 3110 - i.e., new initialization of the NN 500 -corresponds to state 911 (cf. FIG. 4B), i.e., new scene.

The prediction/the consolidated estimate of box 3110 is then stored at box 3115.

At box 3120, the next input 505 is obtained.

At box 3125, it is determined whether the new input obtained at box 3120 corresponds to a new scene or is rather associated with the same scene as the input previously obtained for which the prediction is stored at box 3115. If the current input corresponds to the same scene, the method commences at box 3130 and the stored prediction of box 3115 is used as consolidated estimate. This corresponds to operating in the state 912 (cf. FIG. 4B). Then, in an iteration 3128, the next input is obtained at box 3120.

Otherwise, if at box 3125 a new scene is detected at box 3125, an iteration 3129 is executed and an altogether new prediction of the target observable is made and provided as the consolidated estimate at box 3110.

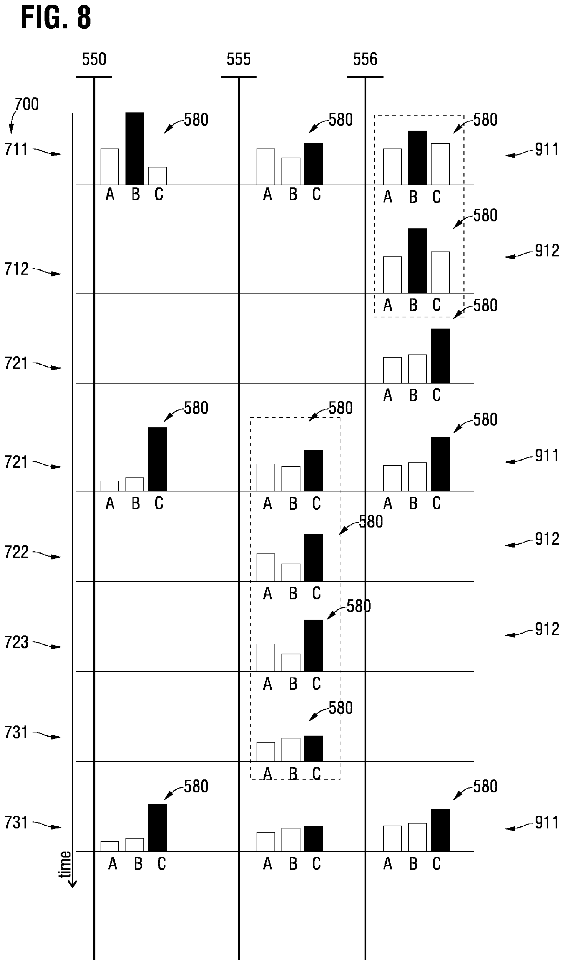

Next, a specific scenario of processing inputs using the NN 500 and the operation in accordance with FIG. 7 is discussed in connection with FIG. 8.

FIG. 8 schematically illustrates processing multiple subsequent radar measurement frames 711, 712, 721, 722, 723, 731 of a time sequence 700 of radar measurement frames. For the purpose of FIG. 8 it is assumed that preprocessing does not occur, i.e., batch processing is disabled. However, similar techniques as disclosed in connection with FIG. 8 can be readily applied by batch processing is used.

FIG. 8 illustrates processing of the radar measurement frames using the NN 500 as discussed in connection with FIG. for a. In particular, FIG. 8 illustrates the probability distributions 580 for the primary estimate 550 and the probability distributions 580 for the early-exit estimates 555, 556.

In FIG. 8, for sake of simplicity, a classification task for three classes "A", "B", and "C" is illustrated. However, other classification tests or regression task could be readily employed.

Initially, the radar measurement frame 711 is processed. As illustrated, the downstream early-exit branch 530 provides the early-exit estimate 556 that is in agreement with the primary estimate 550 provided by the main processing branch 510. Conversely, the upstream early-exit branch 520 provides the early-exit estimate 555 that is not in agreement with the primary estimate 550 and the early-exit estimate 556. Accordingly, both the primary estimate 550, as well as the early-exit estimate 556 correspond to the majority vote among all estimates 550, 555, 556. The consolidated estimate 115 is determined either as the primary estimate 550 or based on the majority vote (e.g., as an average of the early-exit estimate 556 and the primary estimate 550).

The early-exit branch 530 is then selected as the scene-characteristic early-exit branch for the current scene 80-1. This is because the early-exit branch 530 is the most upstream early-exit branch that conforms with the majority vote (cf. EXAMPLE B as discussed in connection with FIG. 4B; cf. Eq. 6.). Alternatively, to selecting the most upstream early-exit branch that conforms with the majority vote, it would be possible to select the most upstream early-exit branch that conforms with the primary estimate 550.

In further detail, it would be possible to consider all breakout layers of the processing pipeline 510 that conform with the majority vote and/or the primary estimate 550. In the scenario FIG. 4A, this is only the breakout layer 512. From amongst this subset of breakout layers (in general, more than a single layer), the early-exit branch is selected that is coupled to the most upstream breakout layer of the subset: here the early-exit branch 530 coupled to the breakout layer 512. This corresponds to Eq.

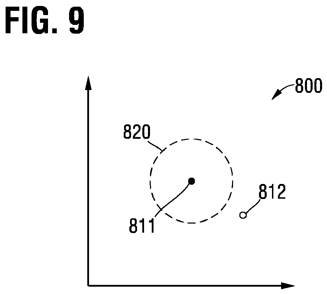

Next, the subsequent radar measurement frame 712 is processed. The radar measurement frame 712 is different than the radar measurement frame 711. It is determined whether the radar measurement frame 711 and the radar measurement frame 712 correspond to the same scene 80-1. Such determination can include determining a similarity score between the early-exit estimate 556 determined for the radar measurement frame 711 and the early-exit estimate 556 determined for the radar measurement frame 712. The similarity score can be a Euclidean distance between these two instances of the early-exit estimate 556. Cf. Eq. 7. This is illustrated in FIG. 9. Here, the position 811, in the output space 800 of the early-exit estimate 556 determined for the radar measurement frame 711 is illustrated. The early-exit estimate 556 determined for the radar measurement frame 712 is located at a position 812 that is closer than a certain threshold 820 from the position 811. Accordingly, the similarity score indicates that the early-exit estimate 556 determined for the radar measurement frame 711 and the early-exit estimate 556 determined for the radar measurement frame 712 are similar to each other. Thus, it can be concluded that the radar measurement frames 711, 712 correspond to the same scene 80-1. Then, it is possible to abort processing of the radar measurement frame 712 in the processing pipeline 510 downstream of the breakout layer 512.

In FIG. 9, the similarity score is based on a threshold comparison between a distance in the space of the respective outputs. The distance can be compared to a predefined threshold. As a general rule, different predefined thresholds can be used for different early-exit branches. It would also be possible to use the same distance for all early-exit branches.

Referring to FIG. 8: the radar measurement frame 721 is then processed. The radar measurement frame 721 is again different than any one of the radar measurement frames 711, 712. It is determined whether the radar measurement frame 721 and the radar measurement frame 712 correspond to the same scene. Again, a similarity score is determined. Referring again to FIG. 9, the position 813 is associated with the early-exit estimate 556 determined by the selected early-exit branch 530. The position 813 has a distance to the position 811 that is above the threshold 820; so that, accordingly, it is assumed that the scene has changed, from the scene 80-1 to the scene 80-2 (dashed lines in FIG. 8). The operation switches back to the state 911 (cf. FIG. 4B). This triggers processing of the input 505 that is based on the radar measurement frame 721 in the entire processing pipeline 510 to obtain the primary estimate 550. Also, the input 505 based on the radar measurement frame 721 is processed in any remaining early-exit branch such as the early-exit branch 520 to obtain the early-exit estimate 555.

The early-exit estimate 556 determined for the radar measurement frame 721 being dissimilar to the early-exit estimate 556 determined for the radar measurement frame 712 triggers selecting a new scene-characteristic early-exit branch for the new scene 80-2; in this case, this is the early-exit branch 520 providing the early-exit estimate 555. This is because the early-exit branch 520 is the most upstream early-exit branch amongst all early-exit branches 520, 530 that conform with the majority vote and the estimate 555 provided by the processing pipeline 510.

Next, the subsequent input 505 based on the radar measurement frame 722 is processed. The early-exit estimate 555 determined for the radar measurement frame 722 is compared to the early-exit estimate 555 determined for the radar measurement frame 721. They are similar and accordingly the input 505 based on the radar measurement frame 722 is not further processed in the processing pipeline 510 and the early-exit branch 530.

The consolidated estimate 115 can be determined based on the radar measurement frame 721. This is the radar measurement frame 721 that initialized the current scene 80-2, i.e., corresponding to last operating in the state 911. In detail, the consolidated estimate 115 provided for the radar measurement frame 722 is the majority vote amongst all estimates 550, 555, 556 determined for the radar measurement frame 721; or could be the primary estimate 550 determined for the radar measurement frame 721. This would correspond to EXAMPLE A discussed in connection with FIG. 4B; cf. Eq. 5.

Alternatively, the consolidated estimate 115 can be determined based on the radar measurement frame 722. For instance, the consolidated estimate can be determined as the early exit estimate 555 determined for the radar measurement frame 722. This would correspond to EXAMPLE B as discussed in connection with FIG. 4B; cf. Eq. 8.

Next, the input 505 based on the subsequent radar measurement frame 723 is processed. The early-exit estimate 555 determined for the radar measurement frame 723 is compared to the early-exit estimate 555 determined for the radar measurement frame 721. They are similar and accordingly the radar measurement frame 723 is not further processed in the processing pipeline 510 and the early-exit branch 530.

The consolidated estimate 115 can be determined based on the radar measurement frame 721. This is the radar measurement frame 721 that initialized the current scene 80-2, i.e., corresponding to last operating in the state 911. In detail, the consolidated estimate 115 provided for the radar measurement frame 723 is the majority vote amongst all estimates 550, 555, 556 determined for the radar measurement frame 721; or could be the primary estimate 550 determined for the radar measurement frame 721. This would correspond to EXAMPLE A discussed in connection with FIG. 4B; cf. Eq. 5.

Alternatively, the consolidated estimate 115 can be determined based on the radar measurement frame 723. For instance, the consolidated estimate can be determined as the early exit estimate 555 determined for the radar measurement frame 722. This would correspond to EXAMPLE B as discussed in connection with FIG. 4B; cf. Eq. 8.

For the subsequent radar measurement frame 731 again a significant deviation between the early-exit estimate 555 determined for the radar measurement frame 731 and the early-exit estimate 555 determined for the radar measurement frame 721 is detected. Thus, the radar measurement frame 731 is continued to be processed in the processing pipeline 510 to obtain the primary estimate 550 and further processed in the early-exit branch 530 to obtain the early-exit estimate 556, as previously explained. Downstream processing of the input 505 associated with the radar measurement frames 731 is executed.

The consolidated estimate 115 can then be, e.g., the estimate primary estimate 550 determined for the radar measurement frame 731 or the majority vote (cf. Eq. 8, second row; cf. Eq. 5, second row) across all estimates 550, 555, 556 determined for the radar measurement frame 731.

As will be appreciated from FIG. 8, to determine the similarity score between the respective early-exit estimates 555 determined for the radar measurement frame 723 it is necessary to retain, and a memory, the respective early-exit estimates 555 determined for the radar measurement 721. Similarly, when relying on an early output, the early-exit estimate 555 or the majority vote amongst the early-exit estimates 555, 556 and the primary estimate 550 determined for the radar measurement frame 721 are retained in the memory until re-transitioning back to the state 911 for the radar measurement frame 731.

Thus, a concept of temporal patience is introduced where comparisons are made across multiple radar measurement frames of the time sequence 700. Not only nearest neighbors in the time sequence 700 are considered for respective comparisons (e.g., for the similarity score), but also radar measurement frame that are offset by other intermediate radar measurement frames.

FIG. 8 illustrates the logic for selecting the most upstream early-exit branch that conforms with the majority vote (or, alternatively, with the primary estimate 550) as the scene-characteristic early-exit branch. This is only one example. In other scenarios it would be possible to always select the most upstream early-exit branch from all early-exit branches (i.e., the architecture of FIG. 4A, to always use the early-exit branch 520 as the scene-characteristic early-exit branch).

Summarizing, techniques of using an early-exit neural network for processing of radar measurement frames have been disclosed. Changes in the input data are quantified across samples by calculating the change in the output vector of early-exit branches. This allows reusing operations between the detection of changes, as well as prediction of the target observable. A simple similarity measure, i.e., the distance in the classification vector space/output space is used. The similarity metric is used to detect new scenes that are then labeled (i.e., respective target observable is predicted) by, e.g., the majority vote of all available classifiers of the neural network (i.e., primary estimate from main processing pipeline and early-exit estimates). Subsequent inputs that are similar to the initial input of the scene are then either labeled by the earliest agreeing classifier/early-exit branch; or the majority vote label of the initial input of the scene is re-used, if the change of the earliest classifiers low enough.

Further summarizing, at least the following EXAMPLES have been disclosed.

EXAMPLE 1. A computer-implemented method, comprising:

- obtaining a plurality of radar measurement frames (101, 102, 103),
- processing, in a deep neural network (500), inputs (505) to the deep neural network (500), the inputs (505) being based on the plurality of radar measurement frames (101, 102, 103),

  wherein the deep neural network (500) comprises a processing pipeline (510) formed by a plurality of layers (511, 512, 513, 514), the processing pipeline (510) providing an estimate (550) of a target observable,
  wherein two or more layers (511, 512) of the plurality of layers (511, 512, 513, 514) are coupled with a respective early-exit branch (520, 530) of the deep neural network (500), each early-exit branch (520, 530) providing a respective early-exit estimate (555, 556) of the target observable, to thereby enable selectively aborting further processing of an input (505) of the inputs (505) in the processing pipeline (510).

EXAMPLE 2. The computer-implemented method of EXAMPLE 1, further comprising:

- sequentially processing the inputs (505) in the deep neural network (500),
- when sequentially processing the inputs (505), monitoring an evolution of at least one of the early-exit estimates (555, 556) of the target observable, and
- depending on said monitoring, either re-using an earlier estimate of the target observable as a consolidated estimate (115) of the deep neural network (500), or updating the consolidated estimate (115) of the deep neural network (500) based on an output of the processing pipeline (510).

EXAMPLE 3. The computer-implemented method of EXAMPLE 2, further comprising:

- aborting processing the inputs (505) in the processing pipeline (510) when re-using the earlier estimate of the target observable as the consolidated estimate (115) of the deep neural network (500).

EXAMPLE 4. The computer-implemented method of any one of the preceding EXAMPLEs, further comprising:

- determining, for each of multiple subsequent scenes (80, 80-1, 80-2) captured by the plurality of radar measurement frames (101, 102, 103), a consolidated estimate (115) of the deep neural network (500) based on a respective selected one of the early-exit estimates (555, 556).

EXAMPLE 5. The computer-implemented method of any one of the preceding EXAMPLEs, further comprising:

- selecting, for each of multiple subsequent scenes (80, 80-1, 80-2) captured by the plurality of radar measurement frames (101, 102, 103), a given one of the early-exit estimates (555, 556) based on a comparison of all of the early-exit estimates (555, 556) and the estimate provided by the processing pipeline (510).

EXAMPLE 6. The computer-implemented method of any one of the preceding EXAMPLEs, further comprising:

- detecting a change from a first scene captured by the plurality of radar measurement frames (101, 102, 103) to a second scene captured by the plurality of radar measurement frames by monitoring an evolution of a given early-exit estimate across multiple inputs (505).

EXAMPLE 7. The computer-implemented method of any one of the preceding EXAMPLEs, further comprising:

- determining a consolidated estimate (115) of the deep neural network (500) based on a majority vote among the early-exit estimates (555, 556) and the estimate provided by the processing pipeline (510).

EXAMPLE 8. The computer-implemented method of any one of the preceding EXAMPLEs, further comprising:

- processing, in the deep neural network (500), a first input (505) that is based on one or more first radar measurement frames (721) of the plurality of radar measurement frames (701, 702, 703), a given one (520) of the early-exit branches (520, 530) providing a first early-exit estimate for the first input (505),
- after processing the first input (505), processing, in the deep neural network (500), a second input (505) that is based on one or more second radar measurement frames (722, 723) of the plurality of radar measurement frames (701, 702, 703), the second input (505) being different than the first input (505), the given one (520) of the early-exit branches (520, 530) providing a second early-exit estimate for the second input (505),

- determining a similarity score between the first early-exit estimate and the second early-exit estimate, and
- upon the similarity score between the first early-exit estimate and the second early-exit estimate being indicative of the first early-exit estimate being similar to the second early-exit estimate, selectively aborting said processing of the second input (505) in the processing pipeline (510) downstream of the respective one of the plurality of layers (511, 512, 513, 514) to which the given one of the early-exit branches (520, 530) is coupled.

EXAMPLE 9. The computer-implemented method of EXAMPLE 8, further comprising:

- selecting the given one (510) of the early-exit branches (520, 530) as the early-exit branch (520, 530) that is coupled to the most upstream layer of the two or more layers (511, 512) along the processing pipeline (510).

EXAMPLE 10. The computer-implemented method of EXAMPLE 8, further comprising:

- determining a subset of the two or more layers (511, 512) by selecting, from the two or more layers (511, 512), all layers that are coupled to early-exit branches (520, 530) which provide the same early-exit estimate (555, 556) of the target observable for the first input (505), and
- selecting the given one of the early-exit branches (520, 530) as the early exit branch that is coupled to the most upstream layer of the subset.

EXAMPLE 11. The computer-implemented method of EXAMPLE 10,
wherein the early-exit estimate provided by all early-exit branches (520, 530) coupled to the layers of the subset for the first input (505) is the same as the estimate provided by the processing pipeline (510) for the first input (505) .
EXAMPLE 12. The computer-implemented method of EXAMPLE 10,
wherein the early-exit estimate provided by all early-exit branches (520, 530) coupled to the layers of the subset for the first input (505) is a majority vote among all early-exit estimates (555, 556) provided by all early-exit branches (520, 530) of the deep neural network (500) for the first input (505) and the estimate provided by the processing pipeline (510) for the first input (505).
EXAMPLE 13. The computer-implemented method of any one of EXAMPLEs 10 to 12, further comprising:

- prior to processing the first input (505) in the deep neural network (500), processing, in the deep neural network (500), a third input (505) based on one or more third radar measurement frames (712) of the plurality of radar measurement frames (701, 702, 703), the given one or another given one of the early-exit branches (520, 530) providing a third early-exit estimate for the third input (505),
- determining the similarity score between the third early-exit estimate and the first early-exit estimate,

wherein said selecting of the given one of the early-exit branches (520, 530) is triggered by the similarity score between the third early-exit estimate and the first early-exit estimate being indicative of the of the third early-exit estimate being dissimilar to the first early-exit estimate.
EXAMPLE 14. The computer-implemented method of any one of EXAMPLEs 8 to 13,
wherein the similarity score comprises a Euclidian distance.
EXAMPLE 15. The computer-implemented method of any one of EXAMPLEs 8 to 14, further comprising:

- upon the similarity score being indicative of the first early-exit estimate being similar to the second early-exit estimate, providing, as a consolidated estimate (115) of the target observable, the second early-exit estimate.

EXAMPLE 16. The computer-implemented method of any one of EXAMPLEs 8 to 14, further comprising:

- upon the similarity score being indicative of the first early-exit estimate being similar to the second early-exit estimate, providing, as a consolidated estimate (115) of the target observable, a majority vote among all early-exit estimates (555, 556) provided by all early-exit branches (520, 530) and the estimate provided by the processing pipeline (510) for the first input (505).

EXAMPLE 17. The computer-implemented method of any one of EXAMPLEs 8 to 16, further comprising:

- upon the similarity score being indicative of the first early-exit estimate being dissimilar to the second early-exit estimate, continuing said processing of the second input (505) in the processing pipeline (510) downstream of the respective one of the plurality of layers to which the selected one of the early-exit branches (520, 530) is coupled.

EXAMPLE 18. The computer-implemented method of EXAMPLE 17, further comprising:

- upon the similarity score being indicative of the first early-exit estimate being dissimilar to the second early-exit estimate, providing, as a consolidated estimate (115) of the target observable, a majority vote across all early-exit estimates (555, 556) provided by all early-exit branches (520, 530) and the estimate provided by the processing pipeline (510) for the second input (505).

EXAMPLE 19. The computer-implemented method of EXAMPLE 17, further comprising:

- upon the similarity score being indicative of the first early-exit estimate being dissimilar to the second early-exit estimate, providing, as a consolidated estimate (115) of the target observable, the estimate provided by the processing pipeline (510) for the second input (505).

EXAMPLE 20. The computer-implemented method of any one of EXAMPLEs 8 to 19,

wherein the plurality of radar measurement frames (101, 102, 103) is obtained as a time sequence (700),
wherein the one or more first radar measurement frames (721) are at earlier times of the time sequence (200) than the one or more second radar measurement frames (723).

EXAMPLE 21. The computer-implemented method of EXAMPLE 20,
wherein one or more further radar measurement frames (722) of the time sequence (700) are arranged in-between the one or more first radar measurement frames (721) and the one or more second radar measurement frames (723) along the time sequence (700).
EXAMPLE 22. The computer-implemented method of any one of the preceding EXAMPLEs,

wherein the plurality of radar measurement frames (101, 102, 103) is obtained as a time sequence,
wherein the method further comprises:

- forming multiple batches, each batch of the multiple batches comprising two or more radar measurement frames sequentially selected from the time sequence,

wherein the inputs (505) of the deep neural network (500) are based on the batches.

EXAMPLE 23. The computer-implemented method of EXAMPLE 22, further comprising:

- for each of the multiple batches: forming a respective aggregated radar measurement frame based on the respective two or more radar measurement frames (101, 102, 103) of the respective batch, the aggregated radar measurement frames comprising a combined time and channel dimension,

wherein the inputs (505) of the deep neural network (500) comprise the aggregated radar measurement frames.
EXAMPLE 24. A computer-implemented method, comprising:

- providing, to a deep neural network (500), a first input (505) of a sequence of inputs (505) and processing, in a main processing pipeline (510) of the deep neural network (500), the first input (505), to thereby obtain an estimate of a target observable,
- providing, to the deep neural network (500), one or more second inputs (505) of the sequence of inputs (505) and monitoring outputs of at least one of one or more early-exit branches (520, 530) of the deep neural network (500) coupled to the main processing line when providing the first input (505) and the one or more second inputs (505), and
- depending on said monitoring, configuring whether at least one of the one or more second inputs is processed in the main processing pipeline.

EXAMPLE 25. The computer-implemented method of EXAMPLE 24, further comprising:

- upon obtaining the estimate of the target observable from processing the first input (505) in the main processing pipeline (510): selecting a given one of the one or more early-exit branches (520, 530) based on a similarity between an output of each of the one or more early-exit branches (520, 530) and an output of the main processing pipeline (510),

wherein the output of the given one of the one or more early-exit branches (520, 530) is monitored.

EXAMPLE 26. The computer-implemented method of EXAMPLE 24 or 25,
wherein said monitoring of the outputs of the at least one of the one or more early-exit branches (520, 530) comprises determining a similarity measure between a first output of the at least one of the one or more early-exit branches (520, 530) when providing the first input (505) to the deep neural network and one or more second outputs of the at least one of the one or more early-exit branches (520, 530) when providing the one or more second inputs (505) the neural network.

EXAMPLE 27. The computer-implemented method of any one of EXAMPLEs 24 to 26, further comprising:

- responsive to processing the first input (505) in the main processing pipeline (510), storing and re-using the estimate of the target observable until it is being updated by processing the one or more second inputs (505) in the main processing pipeline (510).

EXAMPLE 28. The computer-implemented method of any one of EXAMPLEs 24 to 27, further comprising:

- depending on said monitoring, selectively updating the estimate of the target observable depending on the output of the at least one of the one or more early-exit branches.

EXAMPLE 29. A computer-implemented method of processing inputs (505) to a deep neural network (500), the deep neural network (500) comprising a processing pipeline (510) of a plurality of layers (511, 512, 513, 514), the processing pipeline (510) providing an estimate (550) of a target observable, two or more layers (511, 512) of the plurality of layers (511, 512, 513, 514) being coupled with a respective early-exit branch of the deep neural network (500), each early-exit branch providing a respective early-exit estimate (555, 556) of the target observable,
wherein the method comprises:

- obtaining a plurality of datasets,
- processing, in the deep neural network (500), a first input (505) that is based on one or more first datasets of the plurality of datasets, a given one of the early-exit branches (520, 530) providing a first early-exit estimate for the first input (505),
- after processing the first input (505), processing, in the deep neural network (500), a second input (505) that is based on one or more second datasets of the plurality of datasets, the second input (505) being different than the first input (505), the given one of the early-exit branches (520, 530) providing a second early-exit estimate for the second input (505),
- determining a similarity score between the first early-exit estimate and the second early-exit estimate, and
- depending on the similarity score between the first early-exit estimate and the second early-exit estimate, selectively processing of the second input (505) in the processing pipeline (510) downstream of the respective one of the plurality of layers to which the given one of the early-exit branches (520, 530) is coupled.

EXAMPLE 30. A low-power embedded compute circuitry (62) configured to execute the method of any one of the preceding EXAMPLES.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, while various examples have been disclosed in the context of classification tasks, similar techniques may be applied for regression tasks as well.

**Claims**

1. A computer-implemented method, comprising:

   - obtaining a plurality of radar measurement frames (101, 102, 103),
   - processing, in a deep neural network (500), inputs (505) to the deep neural network (500), the inputs (505) being based on the plurality of radar measurement frames (101, 102, 103),
   wherein the deep neural network (500) comprises a processing pipeline (510) formed by a plurality of layers (511, 512, 513, 514), the processing pipeline (510) providing an estimate (550) of a target observable,
   wherein two or more layers (511, 512) of the plurality of layers (511, 512, 513, 514) are coupled with a respective early-exit branch (520, 530) of the deep neural network (500), each early-exit branch (520, 530) providing a respective early-exit estimate (555, 556) of the target observable, to thereby enable selectively aborting further processing of an input (505) of the inputs (505) in the processing pipeline (510).

2. The computer-implemented method of claim 1, further comprising:

- sequentially processing the inputs (505) in the deep neural network (500),
- when sequentially processing the inputs (505), monitoring an evolution of at least one of the early-exit estimates (555, 556) of the target observable, and
- depending on said monitoring, either re-using an earlier estimate of the target observable as a consolidated estimate (115) of the deep neural network (500), or updating the consolidated estimate (115) of the deep neural network (500) based on an output of the processing pipeline (510).

3. The computer-implemented method of claim 2, further comprising:

- aborting processing the inputs (505) in the processing pipeline (510) when re-using the earlier estimate of the target observable as the consolidated estimate (115) of the deep neural network (500).

4. The computer-implemented method of any one of the preceding claims, further comprising:

- determining, for each of multiple subsequent scenes (80, 80-1, 80-2) captured by the plurality of radar measurement frames (101, 102, 103), a consolidated estimate (115) of the deep neural network (500) based on a respective selected one of the early-exit estimates (555, 556).

5. The computer-implemented method of any one of the preceding claims, further comprising:

- selecting, for each of multiple subsequent scenes (80, 80-1, 80-2) captured by the plurality of radar measurement frames (101, 102, 103), a given one of the early-exit estimates (555, 556) based on a comparison of all of the early-exit estimates (555, 556) and the estimate provided by the processing pipeline (510).

6. The computer-implemented method of any one of the preceding claims, further comprising:

- detecting a change from a first scene captured by the plurality of radar measurement frames (101, 102, 103) to a second scene captured by the plurality of radar measurement frames by monitoring an evolution of a given early-exit estimate across multiple inputs (505).

7. The computer-implemented method of any one of the preceding claims, further comprising:

- determining a consolidated estimate (115) of the deep neural network (500) based on a majority vote among the early-exit estimates (555, 556) and the estimate provided by the processing pipeline (510).

8. The computer-implemented method of any one of the preceding claims, further comprising:

- processing, in the deep neural network (500), a first input (505) that is based on one or more first radar measurement frames (721) of the plurality of radar measurement frames (701, 702, 703), a given one (520) of the early-exit branches (520, 530) providing a first early-exit estimate for the first input (505),
- after processing the first input (505), processing, in the deep neural network (500), a second input (505) that is based on one or more second radar measurement frames (722, 723) of the plurality of radar measurement frames (701, 702, 703), the second input (505) being different than the first input (505), the given one (520) of the early-exit branches (520, 530) providing a second early-exit estimate for the second input (505),
- determining a similarity score between the first early-exit estimate and the second early-exit estimate, and
- upon the similarity score between the first early-exit estimate and the second early-exit estimate being indicative of the first early-exit estimate being similar to the second early-exit estimate, selectively aborting said processing of the second input (505) in the processing pipeline (510) downstream of the respective one of the plurality of layers (511, 512, 513, 514) to which the given one of the early-exit branches (520, 530) is coupled.

9. The computer-implemented method of claim 8, further comprising:

- determining a subset of the two or more layers (511, 512) by selecting, from the two or more layers (511, 512), all layers that are coupled to early-exit branches (520, 530) which provide the same early-exit estimate (555, 556) of the target observable for the first input (505), and

- selecting the given one of the early-exit branches (520, 530) as the early exit branch that is coupled to the most upstream layer of the subset.

10. The computer-implemented method of claim 9,
wherein the early-exit estimate provided by all early-exit branches (520, 530) coupled to the layers of the subset for the first input (505) is the same as the estimate provided by the processing pipeline (510) for the first input (505).

11. The computer-implemented method of claim 9,
wherein the early-exit estimate provided by all early-exit branches (520, 530) coupled to the layers of the subset for the first input (505) is a majority vote among all early-exit estimates (555, 556) provided by all early-exit branches (520, 530) of the deep neural network (500) for the first input (505) and the estimate provided by the processing pipeline (510) for the first input (505).

12. The computer-implemented method of any one of claims 9 to 11, further comprising:

- prior to processing the first input (505) in the deep neural network (500), processing, in the deep neural network (500), a third input (505) based on one or more third radar measurement frames (712) of the plurality of radar measurement frames (701, 702, 703), the given one or another given one of the early-exit branches (520, 530) providing a third early-exit estimate for the third input (505),
- determining the similarity score between the third early-exit estimate and the first early-exit estimate,

wherein said selecting of the given one of the early-exit branches (520, 530) is triggered by the similarity score between the third early-exit estimate and the first early-exit estimate being indicative of the of the third early-exit estimate being dissimilar to the first early-exit estimate.

13. The computer-implemented method of any one of claims 8 to 12, further comprising:

- upon the similarity score being indicative of the first early-exit estimate being similar to the second early-exit estimate, providing, as a consolidated estimate (115) of the target observable, the second early-exit estimate or a majority vote among all early-exit estimates (555, 556) provided by all early-exit branches (520, 530) and the estimate provided by the processing pipeline (510) for the first input (505).

14. The computer-implemented method of any one of claims 8 to 13, further comprising:

- upon the similarity score being indicative of the first early-exit estimate being dissimilar to the second early-exit estimate, continuing said processing of the second input (505) in the processing pipeline (510) downstream of the respective one of the plurality of layers to which the selected one of the early-exit branches (520, 530) is coupled.

15. A low-power embedded compute circuitry (62) configured to execute the method of any one of the preceding claims.

# FIG. 1

65

```
┌─────────────────────┐ 70
│   Radar sensor      │
└─────────────────────┘
          │
         ▱ 64
          │
┌─────────┴───────────────────────────────┐ 60
│  ┌──────────┐ 61                         │
│  │    IF    │                            │
│  └──────────┘                            │
│       │                                  │
│  ┌──────────┐ 62    ┌──────────┐ 63      │
│  │   CPU    │───────│   MEM    │         │
│  └──────────┘       └──────────┘         │
│                                          │
└──────────────────────────────────────────┘
```

# FIG. 2

# FIG. 3

# FIG. 4A

# FIG. 4B

# FIG. 5

```
OBTAIN DATA          ─3005

PRE-PROCESS          ─3010

MAKE PREDICTION      ─3015

USE CASE             ─3020
```

# FIG. 6

101  102  103

700

[H,W,C]  [H,W,C]  [H,W,C]

time

[T,H,W,C]

789

[H,W,CxT]

# FIG. 7

3015

OBTAIN INPUT — 3105

MAKE PREDICTION
AND PROVIDE CONSOLIDATED ESTIMATE — 3110

911

3129

STORE PREDICTION — 3115

OBTAIN SAMPLE — 3120

3128

YES

NEW SCENE? — 3125

NO

912 →

USE STORED PREDICTION
TO PROVIDE CONSOLIDATED ESTIMATE — 3130

## FIG. 8

# FIG. 9

Europäisches
Patentamt

European
Patent Office

Office européen
des brevets

# EUROPEAN SEARCH REPORT

Application Number

EP 23 16 1484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 638 491 A (GM GLOBAL TECH OPERATIONS LLC) 8 September 2020 (2020-09-08) | 1-7,15 | INV. G06N3 G01S7 |
| A | * paragraphs [0015], [0046]; claim 1; figure 4 * | 8-14 | |
| X | CN 111 292 366 B (UNIV HUAQIAO) 10 March 2023 (2023-03-10) | 1-7,15 | |
| A | * the whole document * | 8-14 | |

TECHNICAL FIELDS
SEARCHED (IPC)

G01S
G06N

The present search report has been drawn up for all claims

| Place of search | Date of completion of the search | Examiner |
|---|---|---|
| Munich | 27 September 2023 | Riccio, Ettore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 432 162 A1

## ANNEX TO THE EUROPEAN SEARCH REPORT
## ON EUROPEAN PATENT APPLICATION NO.

EP 23 16 1484

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2023

| Patent document cited in search report | | Publication date | Patent family member(s) | | Publication date |
|---|---|---|---|---|---|
| CN 111638491 | A | 08-09-2020 | CN 111638491 | A | 08-09-2020 |
| | | | DE 102020102712 | A1 | 03-09-2020 |
| | | | US 2020278423 | A1 | 03-09-2020 |
| CN 111292366 | B | 10-03-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2023068523 A
- US 2021325509 A
- US 2019302253 A
- US 2022404486 A

### Non-patent literature cited in the description

- Conditional deep learning for energy-efficient and enhanced pattern recognition. **PANDA, PRIYADARSHINI ; ABHRONIL SENGUPTA ; KAUSHIK ROY.** 2016 Design, Automation & Test in Europe Conference & Exhibition (DATE). IEEE, 2016
- Flexdnn: Input-adaptive on-device deep learning for efficient mobile vision. **FANG, BIYI et al.** 2020 IEEE/ACM Symposium on Edge Computing (SEC). IEEE, 2020
- **AMTHOR, MANUEL ; ERIK RODNER ; JOACHIM DENZLER.** Impatient dnns-NNs with dynamic time budgets. *arXiv:1610.02850,* 2016
- **HU, HANZHANG et al.** Learning anytime predictions in NNs via adaptive loss balancing. *Proceedings of the AAAI Conference on Artificial Intelligence.,* 2019, vol. 33 (01